# EUROPÄISCHE PATENTSCHRIFT

(11) **EP 2 338 701 B1**
(45) Veröffentlichungstag und Bekanntmachung des Hinweises auf die Patenterteilung: **23.09.2015**
(21) Anmeldenummer: 10180633.9
(22) Anmeldetag: 28.09.2010
(51) Int. Cl.: B60C 11/03

(54) **Laufflächenprofil eines Fahrzeugreifens**
Vehicle tire tread profile
Profil de surface de roulement d'un pneu de véhicule

(30) Priorität: 17.12.2009 DE 102009059182
(43) Veröffentlichungstag der Anmeldung: 29.06.2011
(73) Patentinhaber: Continental Reifen Deutschland GmbH, 30165 Hannover (DE)
(72) Erfinder: Behr, Ulrich, 30169 Hannover (DE); Fischer, Markus, 30823 Garbsen (DE)
(74) Vertreter: Finger, Karsten

(56) Entgegenhaltungen:
- EP-A1- 0 681 930
- EP-A1- 2 338 702
- EP-A2- 1 870 258
- US-A1- 2009 266 459

## Beschreibung

Die Erfindung betrifft ein Laufflächenprofil eines Fahrzeugreifens - insbesondere eines PKW-Fahrzeugluftreifens - mit wenigstens einer zentralen, in Umfangsrichtung des Fahrzeugreifens über dessen Umfang umlaufenden Umfangsrille sowie mit einer Profilblockreihe im axial äußeren Bereich, dem Schulterbereich des Laufflächenprofils, wobei die Profilblöcke der Profilblockreihe in Umfangsrichtung des Fahrzeugreifens durch Querrillen voneinander getrennt über den Umfang hintereinander angeordnet sind wobei die zentrale Umfangsrille die Profilblockreihe über den Fahrzeugreifenumfang nach axial innen begrenzt, wobei die Querrillen in der zentralen Umfangsrille münden und wobei innerhalb eines Profilblockes wenigstens zwei in Querrichtung angeordnete weitere Querrillen angeordnet sind, welche innerhalb des Profilblockes angebunden sind und den Profilblock in Profilblocksegmente gliedert.

Ein derartiger Fahrzeugluftreifen ist aus der EP 0 681 930 A1 bekannt geworden.

Ein Laufflächenprofil eines Fahrzeugreifens muss vielen unterschiedlichen Anforderungen des Fahrbetriebes gerecht werden. Ein Zielkonflikt, insbesondere im Hochgeschwindigkeitsbetrieb des Reifens, liegt beispielsweise zwischen Trockenbremsen, Trockenhandling einerseits und guten Aquaplaningeigenschaften, Nassbremsen andererseits. Für gute Trockenbrems- und Handlingeigenschaften sind stabile Schulterblöcke mit einer hohen Quersteifigkeit um ihre Umfangsrichtung und mit geringem Rillenleervolumen vorteilhaft, während für die Aquaplaning- und Nasshandlingeigenschaften viele Kanten für guten Griff und ein großes Rillenleervolumen für gutes Wasserdrainagevermögen vorteilhaft sind. Dieses sind einander widersprechende Anforderungen.

Es ist die Aufgabe der vorliegenden Erfindung, mit einfachen Mitteln ein Laufflächenprofil eines Fahrzeugreifens zu schaffen, das bei guten Trockenbrems- und Trockenhandlingeigenschaften ebenfalls gute Aquaplaning- und Naßhandlingeigenschaften aufweist.

Die Aufgabe wird erfindungsgemäß dadurch gelöst, dass die Länge eine Profilblockes (9) zwischen 60mm und 180mm, vorzugsweise 100mm und 140mm beträgt.

"Zentrale Umfangsrille" meint eine Umfangsrille, die im Zentrum, also axial innen (AI) von der Profilblockreihe, also im mittigen Bereich des Laufflächenprofils angeordnet ist. Der mittige Bereich des Laufflächenprofils nimmt vorzugsweise bis zu 35% der axialen Breite der Bodenaufstandsfläche (TA) des Laufflächenprofils ein.

Erfindungsgemäß ist ein Laufflächenprofil geschaffen, dass -in axialer Richtung betrachtet- eine sehr breite Schulterblockreihe aufweist, die von axial außen bis an den mittigen Bereich des Laufflächenprofils bis zur ersten Umfangsrille reicht. Hierdurch ist eine insbesondere in Bezug auf die erwünschte Quersteifigkeit sehr stabile Profilblockreihe geschaffen, die verbesserte Handlingeigenschaften ermöglicht. Dadurch, dass die Querrillen in die zentrale Umfangsrichtung münden, ist zudem ein verbessertes Drainagevermögen erreicht. Die weiteren Querrillen münden nicht in die zentrale Umfangsrille und münden auch nicht aus dem Schulterbereich hinaus, sondern enden beidseits innerhalb des Profilblockes. Durch die Anordnung weiterer Querrillen sind einerseits weitere Kanten für ein gutes Nasshandling zur Verfügung gestellt, weiterhin verbessern die weiteren Querrillen durch zusätzliche Drainagewirkung die Aquaplaningeigenschaften. Die weiteren Querrillen machen den Profilblock zudem in sich weicher, was zu einer besseren Anpassung der Kontaktfläche des Reifens an den Untergrund und zu einer vorteilhaften Vergleichmäßigung des Footprints führt. Es sind besonders große und in Bezug auf die Umfangsrichtung lang erstreckte Profilblöcke erhalten, die die für das Handling erforderliche Quersteifigkeit aufweisen.

Besonders bevorzugt ist die Profilblockreihe an dem zur Fahrzeugaußenseite (OU) hinweisenden ausgebildeten Schulterbereich angeordnet. Die zur Fahrzeugaußenseite weisende Profilblockreihe ist besonders beim Handling und damit auf Querkräfte beansprucht. Zweckmäßig ist es, wenn das Laufflächenprofil ein asymmetrisches Profil ist.

Das Wasserdrainagevermögen ist insbesondere dann verbessert, wenn die Querrillen eine Breite von 5 - 10mm, vorzugsweise von 7mm aufweisen.

Vorteilhaft ist es, wenn die weiteren Querrillen parallel zu den Querrillen angeordnet sind. Hierdurch ist die Steifigkeit des Profilblockes und sein Abrieb vergleichmäßigt. Vorzugsweise weisen die weiteren Querrillen eine Breite von 2 - 4mm, vorzugsweise von 3 mm auf.

In einer bevorzugten Ausführungsform bestehen die Querrille und/oder die weitere Querrille aus einem ersten und einem zweiten Erstreckungsbereich, wobei der erste Erstreckungsbereich von axial außen kommend in Form einer Geraden nach axial innen verläuft und einen Winkel α von 0° bis 20°, vorzugsweise von 10° bis 15° mit der axialen Richtung einschließt. Der zweite Erstreckungsbereich verläuft als Gerade unter Bildung eines Winkels β zum ersten Erstreckungsbereich weiter nach axial innen, wobei der Winkel β zwischen 20° und 45°, vorzugsweise 30° bis 35° beträgt. Hierdurch ist die Geräuschemission verbessert.

Zweckmäßig ist es, wenn innerhalb des Profilblockes eine weitere Umfangsrille angeordnet ist, welche benachbart zum Winkel β verläuft. Hierdurch sind die Aquaplaningeigenschaften verbessert.

Zur Fahrgeräuschoptimierung ist es vorteilhaft, wenn die Profilblocksegmente eines Profilblockes verpitcht sind, also die aneinandergrenzenden Profilblocksegmente unterschiedliche Längen in Umfangsrichtung aufweisen.

Die Erfindung wird anhand der nachstehend beschriebenen Figuren, die schematische Ausführungsbeispiele darstellen, näher erläutert. Es zeigen die:
- Fig. 1: eine Aufsicht auf einen Abschnitt eines asymmetrischen Laufflächenprofils eines PKW-Fahrzeugluftreifens;
- Fig. 2: einen Ausschnitt des erfindungsgemäßen Laufflächenprofils der Fig.1 mit jedoch einer anders ausgebildeten Profilblockreihe.

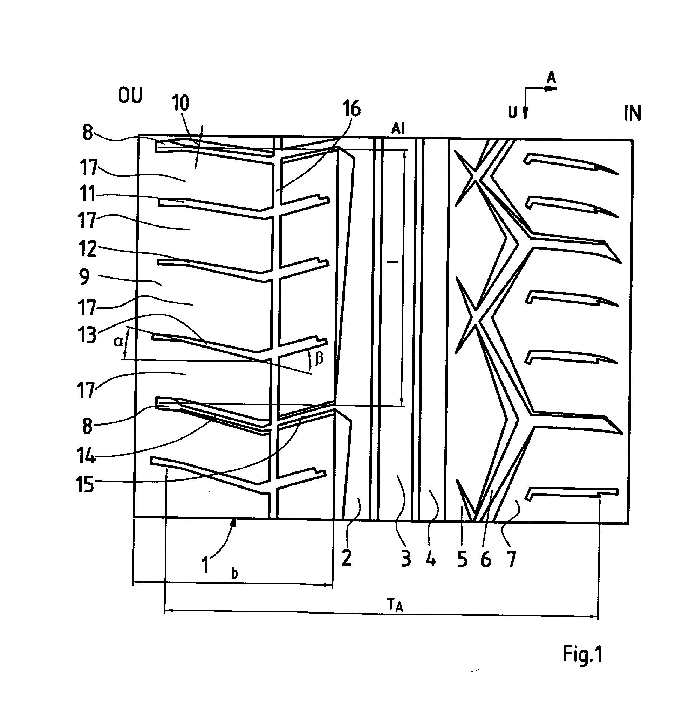

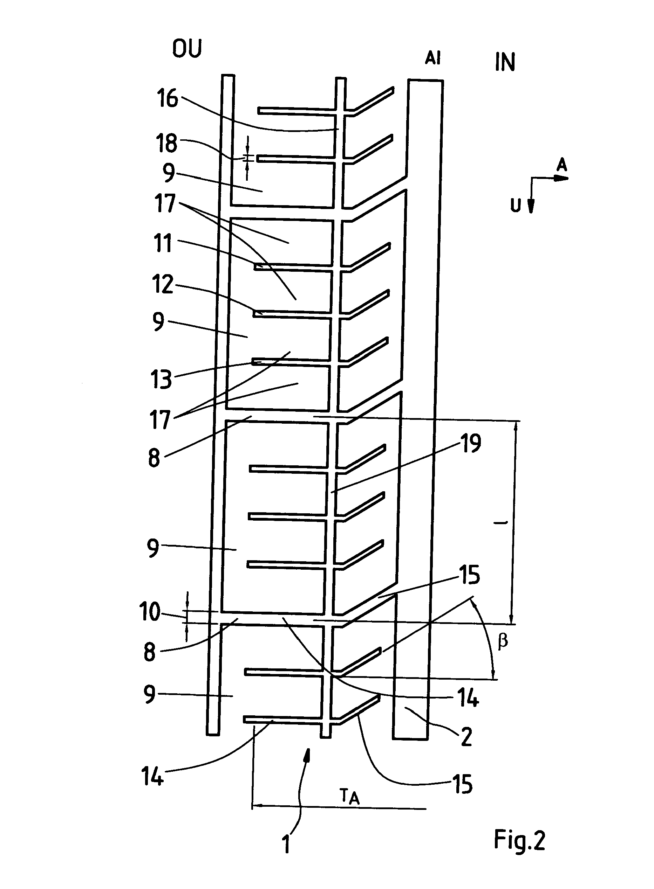

Fig. 1 und Fig. 2 zeigen ein asymmetrisches Laufflächenprofil eines auf einer Felge an einem Personenkraftwagen montierten, im Betriebszustand bei Normdruck befindlichen PKW-Sommerreifens radialer Bauart, der für Hochgeschwindigkeiten geeignet ist.

In der Fig. 1 und der Fig.2 ist die Umfangsrichtung U sowie die axiale Richtung A des Fahrzeugluftreifens mit Pfeilen gekennzeichnet. Der Drehsinn des Reifens entspricht der Umfangsrichtung U.

Die Fig. 1 zeigt eine Aufsicht auf einen Abschnitt eines asymmetrischen Laufflächenprofils eines PKW-Fahrzeugluftreifens. Das Laufflächenprofil weist von der am Fahrzeug zur axialen Außenseite (O U) des Fahrzeugs weisenden axialen Reifenschulter ausgehend in axialer Richtung A nach axial innen zur Fahrzeugmitte (IN) hin weisenden Reifenschulter nebeneinander angeordnet eine in Umfangsrichtung U ausgerichtete Profilblockreihe 1, eine erste zentrale Umfangsrille 2, ein erstes Profilband 3, eine zweite zentrale Umfangsrille 4, ein zweites Profilband 5, welches nach axial innen zur Fahrzeugmitte (IN) eine in Umfangsrichtung umlaufende Zick-Zack-Ausbildung aufweist, eine äußere, ebenfalls in Zick-Zack-Ausbildung umlaufende Umfangsrille 6 sowie eine weitere Schulterblockreihe 7 auf.

Die erste zentrale Umfangsrille 2 ist im mittigen Bereich des Laufflächenprofils angeordnet. Der mittige Bereich des Laufflächenprofils liegt axial innen (AI) und nimmt bis zu 30% der axialen Breite der Bodenaufstandsfläche TA des Laufflächenprofils ein. Die erste zentrale Umfangsrille 2 ist diejenige Umfangsrille, welche im mittigen Bereich nächstliegend zur Fahrzeugaußenseite OU angeordnet ist.

Das Laufflächenprofil weist eine Profilblockreihe 1 auf, die -in axialer Richtung betrachtet- vergleichsweise breit ist und im Bereich der Bodenaufstandsfläche TA eine Breite (b) von etwa 40% der Bodenaufstandsfläche TA, hier 80mm, hat. Die Profilblockreihe 1 erstreckt sich von axial außen bis zur ersten zentralen Umfangsrille 2. Die Profilblockreihe 1 besteht aus hintereinander in Umfangsrichtung angeordneten Profilblöcken 9. Jeder Profilblock 9 ist durch zwei Querrillen 8 in Umfangsrichtung begrenzt. Jede Querrille 8 mündet in die zentrale Umfangsrille 2. Jede Querrille 8 weist eine Breite 10 von 7mm auf, gemessen an der Laufstreifenoberfläche. Innerhalb des Profilblockes 9 sind drei weitere Querrillen 11, 12, 13 angeordnet, welche innerhalb des Profilblockes 9 angebunden sind, also nicht in der zentralen Umfangsrille 2 und nicht aus dem Schulterbereich heraus münden, sondern deren weiteren Querrillen 11, 12, 13 3 innerhalb des Profilblockes 9 enden. Durch diese weiteren Querrillen 11, 12, 13 ist der Profilblock 9 in Profilblocksegmente 17 gliedert. Die weiteren Querrillen 11, 12, 13 3 münden also nicht in die zentrale Umfangsrille 2 und münden auch nicht aus dem Schulterbereich hinaus, sondern enden beidseits innerhalb des Profilblockes 9. Die weiteren Querrillen 11, 12, 13 sind parallel zu den Querrillen 8 angeordnet und haben eine Breite von 3 mm, gemessen an der Laufstreifenoberfläche. Die Querrillen 8 und die weiteren Querrillen 11, 12, 13 bestehen jeweils aus einem ersten Erstreckungsbereich 14 und einem zweiten Erstreckungsbereich 15, wobei der erste Erstreckungsbereich 14 von axial außen kommend in Form einer Geraden nach axial innen verläuft und einen Winkel α von etwa 15° mit der axialen Richtung einschließt. Der zweite Erstreckungsbereich 15 verläuft als Gerade unter Bildung eines Winkels β in Bezug auf den ersten Erstreckungsbereich 14 weiter nach axial innen, wobei der Winkel β etwa 35° beträgt. Die Länge 1 eine Profilblockes 9 beträgt etwa 120mm. Innerhalb des Profilblockes ist eine weitere Umfangsrille 16 benachbart zum Winkel β angeordnet ist. Zur Fahrgeräuschoptimierung sind die Profilblocksegmente 17 eines Profilblockes 9 verpitcht, aneinander angrenzende Profilblocksegmente 17 weisen also in Bezug auf die in Umfangsrichtung unterschiedliche Längen auf.

Die Fig.2 zeigt einen Ausschnitt des Laufflächenprofils der Fig.1, wobei jedoch die Querrillen 8 und die weiteren Querrillen 11, 12, 13 unterschiedlich zu denen der Fig. 1 ausgestaltet sind. Innerhalb des Profilblockes 9 sind drei weitere Querrillen 11, 12, 13 3 angeordnet, welche innerhalb des Profilblockes 9 angebunden sind, also nicht in der zentralen Umfangsrille 2 und nicht aus dem Schulterbereich heraus münden, sondern beidseits innerhalb des Profilblockes 9 enden. Durch diese ist der Profilblock 9 in Profilblocksegmente 17 gliedert. Die weiteren Querrillen 11, 12, 13 sind parallel zu den Querrillen 8 angeordnet und haben eine Breite von 3mm. Die Querrillen 8 und die weiteren Querrillen 11, 12, 13 bestehen aus einem ersten Erstreckungsbereich 14 und einem zweiten Erstreckungsbereich 15, wobei der erste Erstreckungsbereich 14 von axial außen kommend in Form einer Geraden nach axial innen verläuft und einen Winkel α von etwa 0° mit der axialen Richtung einschließt. Der zweite Erstreckungsbereich 15 verläuft als Gerade unter Bildung eines Winkels β in Bezug auf den ersten Erstreckungsbereich 14 weiter nach axial innen, wobei der Winkel β etwa 35° beträgt. Die Profilblocksegmente 17 weisen in Umfangsrichtung die gleichen Längen auf.

### Bezugszeichenliste

### (Teil der Beschreibung)

- 1: Profilblockreihe
- 2: erste zentrale Umfangsrille
- 3: erstes Profilband
- 4: zweite zentrale Umfangsrille
- 5: zweites Profilband
- 6: Umfangsrille
- 7: weitere Schulterblockreihe
- 8: Querrille
- 9: Profilblock
- 10: Breite der Querrille
- 11: weitere Querrille
- 12: weitere Querrille
- 13: weitere Querrille
- 14: erster Erstreckungsbereich
- 15: zweiter Erstreckungsbereich
- 16: weitere Umfangsrille
- 17: Profilblocksegment
- 18: Breite der weiteren Querrille
- 1: Länge Profilblock
- b: Breite Profilblock

## Patentansprüche

1. Laufflächenprofil eines Fahrzeugreifens mit wenigstens einer zentralen, in Umfangsrichtung des Fahrzeugreifens über dessen Umfang umlaufenden Umfangsrille (2) sowie mit einer Profilblockreihe (1) im axial äußeren Bereich, dem Schulterbereich des Laufflächenprofils, wobei die Profilblöcke (9) der Profilblockreihe (1) in Umfangsrichtung des Fahrzeugreifens durch Querrillen (8) voneinander getrennt über den Umfang hintereinander angeordnet sind, wobei die zentrale Umfangsrille (2) die Profilblockreihe (1) über den Fahrzeugreifenumfang nach axial innen begrenzt, wobei die Querrillen (8) in der zentralen Umfangsrille (2) münden und wobei innerhalb eines Profilblockes (9) wenigstens zwei in Querrichtung angeordnete weitere Querrillen (11, 12, 13) angeordnet sind, welche innerhalb des Profilblockes (9) angebunden sind und den Profilblock (9) in Profilblocksegmente (17) gliedert
**dadurch gekennzeichnet, dass** die Länge (1) eines Profilblockes (9) zwischen 60mm und 180mm, vorzugsweise 100mm und 140mm beträgt.

2. Laufflächenprofil nach Anspruch 1,
**dadurch gekennzeichnet, dass** die Profilblockreihe (1) an dem zur Fahrzeugaußenseite (OU) hinweisenden ausgebildeten Schulterbereich angeordnet ist.

3. Laufflächenprofil nach Anspruch 1 oder 2,
**dadurch gekennzeichnet, dass** die Querrillen (8) eine Breite (10) von 5 - 10mm, vorzugsweise von 7mm aufweisen.

4. Laufflächenprofil nach Anspruch 1,
**dadurch gekennzeichnet, dass** die weiteren Querrillen (11, 12, 13) parallel zu den Querrillen (8) angeordnet sind und dass die weiteren Querrillen (11, 12, 13) eine Breite (18) von 2 - 4mm, vorzugsweise von 3mm aufweisen.

5. Laufflächenprofil eines Fahrzeugreifens nach einem oder mehreren der vorangegangenen Ansprüche,
**dadurch gekennzeichnet, dass** die Querrille (8) und/oder die weitere Querrille (11, 12, 13) aus einem ersten und einem zweiten Erstreckungsbereich (14, 15) besteht, wobei der erste Erstreckungsbereich (14) von axial außen kommend in Form einer Geraden nach axial innen verläuft und die Gerade des ersten Erstreckungsbereiches (14) einen Winkel α von 0° bis 20°, vorzugsweise von 10° bis 15° mit der axialen Richtung einschließt und der zweite Erstreckungsbereich (15) als Gerade unter Bildung eines Winkels β zum ersten Erstreckungsbereich (14) weiter nach axial innen verläuft, wobei der Winkel β zwischen 20° und 45°, vorzugsweise 30 bis 35° beträgt.

6. Laufflächenprofil eines Fahrzeugreifens gemäß den Merkmalen von einem oder mehreren der vorangegangenen Ansprüche,
**dadurch gekennzeichnet, dass** die Profilblocksegmente (17) eines Profilblockes (9) verpitcht sind.

7. Laufflächenprofil eines Fahrzeugreifens gemäß den Merkmalen von einem oder mehreren der vorangegangenen Ansprüche,
**dadurch gekennzeichnet, dass** innerhalb des Profilblockes (9) eine weitere Umfangsrille (16) angeordnet ist, welche benachbart zum Winkel β angeordnet ist.

## Claims

1. Tread profile of a vehicle tyre having at least one central peripheral groove (2), running around in the peripheral direction of the vehicle tyre over the periphery thereof, and also having a row of profile blocks (1) in the axially outer region, the shoulder region of the tread profile, wherein the profile blocks (9) of the row of profile blocks (1) are arranged one behind the other in the peripheral direction of the vehicle tyre over the periphery and are separated from one another by transverse grooves (8), wherein the central peripheral groove (2) borders the row of profile blocks (1) in the axially inward direction over the periphery of the vehicle tyre, wherein the transverse grooves (8) open out into the central peripheral groove (2) and wherein at least two further transverse grooves (11, 12, 13), arranged in the transverse direction, are arranged within a profile block (9), are bound within the profile block (9) and divide the profile block (9) into profile block segments (17), **characterized in that** the length (1) of a profile block (9) is between 60 mm and 180 mm, preferably 100 mm and 140 mm.

2. Tread profile according to Claim 1,
**characterized in that** the row of profile blocks (1) is arranged at the shoulder region, formed facing the outer side of the vehicle (OU).

3. Tread profile according to Claim 1 or 2,
**characterized in that** the transverse grooves (8) have a width (10) of 5-10 mm, preferably of 7 mm.

4. Tread profile according to Claim 1,
**characterized in that** the further transverse grooves (11, 12, 13) are arranged parallel to the transverse grooves (8) and **in that** the further transverse grooves (11, 12, 13) have a width (18) of 2-4 mm, preferably of 3 mm.

5. Tread profile of a vehicle tyre according to one or more of the preceding claims,
**characterized in that** the transverse groove (8) and/or the further transverse groove (11, 12, 13) consists of a first and a second region of extent (14, 15), wherein the first region of extent (14) runs in the form of a straight line from axially the outside to axially the inside and the straight line of the first region of extent (14) forms an angle α of 0° to 20°, preferably of 10° to 15°, with the axial direction and the second region of extent (15) runs as a straight line further in the axially inward direction while forming an angle P in relation to the first region of extent (14), wherein the angle β is between 20° and 45°, preferably 30° to 35°.

6. Tread profile of a vehicle tyre according to the features of one or more of the preceding claims,
**characterized in that** the profile block segments (17) of a profile block (9) are pitched.

7. Tread profile of a vehicle tyre according to the features of one or more of the preceding claims,
**characterized in that** a further peripheral groove (16) is arranged within the profile block (9) and is arranged adjacent to the angle β.

## Revendications

1. Profil de surface de roulement d'un pneu de véhicule comprenant au moins une gorge périphérique centrale (2) s'étendant sur la périphérie du pneu de véhicule dans la direction périphérique de ce dernier ainsi qu'une rangée de blocs profilés (1) dans la région axialement extérieure, la région d'épaulement du profil de surface de roulement, les blocs profilés (9) de la rangée de blocs profilés (1) étant disposés les uns derrière les autres sur la périphérie de manière séparée les uns des autres par des gorges transversales (8) dans la direction périphérique du pneu de véhicule, la gorge périphérique centrale (2) limitant axialement vers l'intérieur la rangée de blocs profilés (1) sur la périphérie du pneu de véhicule, les gorges transversales (8) débouchant dans la gorge périphérique centrale (2) et au moins deux gorges transversales supplémentaires (11, 12, 13) disposées dans la direction transversale étant disposées à l'intérieur d'un bloc profilé (9), lesquelles sont raccordées à l'intérieur du bloc profilé (9) et divisent le bloc profilé (9) en segments de bloc profilé (17),
**caractérisé en ce que** la longueur (1) d'un bloc profilé (9) est comprise entre 60 mm et 180 mm, de préférence entre 100 mm et 140 mm.

2. Profil de surface de roulement selon la revendication 1,
**caractérisé en ce que** la rangée de blocs profilés (1) est disposée au niveau de la région d'épaulement tournée vers le côté extérieur du véhicule (OU).

3. Profil de surface de roulement selon la revendication 1 ou 2,
**caractérisé en ce que** les gorges transversales (8) présentent une largeur (10) de 5 - 10 mm, de préférence de 7 mm.

4. Profil de surface de roulement selon la revendication 1,
**caractérisé en ce que** les gorges transversales supplémentaires (11, 12, 13) sont disposées parallèlement aux gorges transversales (8) et **en ce que** les gorges transversales supplémentaires (11, 12, 13) présentent une largeur (18) de 2 - 4 mm, de préférence de 3 mm.

5. Profil de surface de roulement d'un pneu de véhicule selon l'une quelconque ou plusieurs des revendications précédentes,
**caractérisé en ce que** la gorge transversale (8) et/ou la gorge transversale supplémentaire (11, 12, 13) se compose (nt) d'une première et d'une deuxième région d'étendue (14, 15), la première région d'étendue (14) s'étendant axialement vers l'intérieur en provenant axialement de l'extérieur sous la forme d'une droite, et la droite de la première région d'étendue (14) formant un angle α de 0° à 20°, de préférence de 10° à 15° avec la direction axiale, et la deuxième région d'étendue (15) s'étendant davantage axialement vers l'intérieur sous forme de droite en formant un angle β avec la première région d'étendue (14), l'angle β étant compris entre 20° et 45°, de préférence entre 30° et 35°.

6. Profil de surface de roulement d'un pneu de véhicule selon les caractéristiques de l'une quelconque ou de plusieurs des revendications précédentes,
**caractérisé en ce que** les segments de bloc profilé (17) d'un bloc profilé (9) présentent des décalages de pas.

7. Profil de surface de roulement d'un pneu de véhicule selon les caractéristiques de l'une quelconque ou de plusieurs des revendications précédentes,
**caractérisé en ce qu'**à l'intérieur du bloc profilé (9) est disposée une gorge périphérique supplémentaire (16) qui est disposée à proximité de l'angle β.
